Europäisches Patentamt

European Patent Office

Office européen des brevets

(19)

(11) Veröffentlichungsnummer: **0 198 493**
**A2**

(12) # EUROPÄISCHE PATENTANMELDUNG

(21) Anmeldenummer: **86105277.7**

(22) Anmeldetag: **16.04.86**

(51) Int. Cl.⁴: **B 29 C 45/16**

(30) Priorität: **17.04.85 DE 3513863**

(43) Veröffentlichungstag der Anmeldung: **22.10.86**
**Patentblatt 86/43**

(84) Benannte Vertragsstaaten: **DE FR GB IT SE**

(71) Anmelder: **Dr. Alois Stankiewicz GmbH,**
**D-3101 Adelheidsdorf (DE)**

(72) Erfinder: **Lohmar, Ernst, Dr., Hauptstrasse 186,**
**D-3101 Adelheidsdorf (DE)**
Erfinder: **Jaroschewitz, Erhard, Weidenweg 12,**
**D-3173 Müden/A (DE)**

(74) Vertreter: **Gunschmann, Klaus, Dipl.-Ing. et al,**
**Patenanwälte Dipl.-Ing. H. Mitscherlich Dipl.-Ing. H.**
**Gunschmann Dipl.-Ing. Dr.rer.nat. W. Körber Dipl.-Ing. J.**
**Schmidt-Evers Dipl.-Ing. W. Melzer**
**Steinsdorfstrasse 10, D-8000 München 22 (DE)**

(54) Akustisch wirksamer Materialaufbau.

(57) Bei einem luftschalldämmenden und körperschall-dämpfenden Materialaufbau aus Kunststoff für Konstruktionsteile (1), insbesondere für Kraftfahrzeugteile, bestehend aus wenigstens drei Querschnittszonen (3, 4), von denen die mittlere Zone (3) aus einem weichen bzw. elastischen Kernmaterial besteht, sollen auch bei einer schwierigen Form der Konstruktionsteile (1) die mittlere Zone (3) und die Aussenzone bzw. -zonen (4) einfach und schnell und somit preisgünstig hergestellt werden können, weshalb die mittlere Zone (3) und die Aussenzone (4) gleichzeitig durch Einspritzen der Polymerschmelze oder -schmelzen mittels einer 2-Kanal-Spritzdüse (6) innerhalb eines Spritzgiesswerkzeuges (5) hergestellt sind.

## Akustisch wirksamer Materialaufbau

Die Erfindung betrifft einen luftschalldämmenden und körperschalldämpfenden Materialaufbau aus Kunststoff für Konstruktionsteile, bestehend aus wenigstens drei Querschnittszonen, von denen die mittlere Zone aus einem weichen Kernmaterial besteht.

Konstruktionsteile dieser Art werden überall dort eingesetzt, wo Schallimmissionen und/oder Schallemissionen verringert werden sollen. Anwendungsfälle hierfür sind z.B. der Schiff-, Flugzeug-und insbesondere Kraftfahrzeugbau, wo aufgrund der vorgegebenen Baugröße eine Nebeneinanderanordnung von Schallerzeugern (Antriebsmotor) und vor Schall zu schützenden Räumen vorgegeben ist und deshalb Schallschutzmaßnahmen von besonderer Bedeutung sind.

Die luftschalldämmende und körperschalldämpfende Wirkung eines bekannten Materialaufbaus beruht darauf, daß aufgrund des weichen Kernmaterials mit hohen inneren Verlusten sowohl durch Luftschall als auch durch Körperschall (Eigenschwingungen) hervorgerufene Schwingungen der Oberfläche des den Materialaufbau tragenden Konstruktionsteils verringert werden, die für das Schallaufkommen verantwortlich sind.

Bis heute lassen sich Konstruktionsteile, z.B. für den Kraftfahrzeugbau, wie Konsolen, Türverkleidungen und Hutablagen nur mit zusätzlichen, zeitaufwendigen Ergänzungsmaßnahmen dämpfen oder dämmen, indem auf diese Konstruktionsteile akustisch wirksame Beläge, z.B. Dämpfungsfolien aufgeschmolzen oder aufgeklebt werden. Diese zu-

2

sätzlichen Maßnahmen bedingen einen wesentlichen Herstellungsmehraufwand, weil das betreffende Konstruktionsteil und der akustisch wirksame Belag jeweils für sich hergestellt werden und dann diese Teile miteinander verbunden werden. Dabei ist zu berücksichtigen, daß es sich bei den betreffenden Konstruktionsteilen meistens um Teile schwieriger Form handelt, wodurch ein nachträgliches Belegen mit einem akustisch wirksamen Belag noch erschwert oder auch gar nicht möglich ist. Eine weitere Schwierigkeit besteht darin, daß übliche zur Luftschalldämmung bzw. Körperschalldämpfung verwendete Materialien weiche und/oder kreidende Oberflächen haben. Aus diesem Grunde ist man oft darauf angewiesen, die Rückseiten solcher Konstruktionsteile mit akustisch wirksamen Belägen zu versehen, wodurch die genannte, nachträgliche, zusätzliche Maßnahme des Belegens noch weiter erschwert wird. Bei Konstruktionsteilen, die typische Sichtteile darstellen, besteht im weiteren die Schwierigkeit, daß aufgrund der üblichen akustisch wirksamen Beläge die Oberflächengestaltung gaz erheblich eingeschränkt ist. Ist z.B. eine genarbte Oberfläche erwünscht, dann muß wegen der akustisch wirksamen Belegung auf eine nicht sichtbare Fläche des betreffenden Konstruktionsteiles ausgewichen werden, was oft gar nicht möglich ist.

Der schon erwähnte bekannte Materialaufbau ist an einem Konstruktionsteil in Form einer Trennwand (Stirnwand) des Fahrgastraumes eines Kraftfahrzeuges verwirklicht, das aus drei Schichten besteht, nämlich der Trennwand, einer darauf aufgebrachten Schaumstoffschicht und einer die Schaumstoffschicht abdeckenden Schwerschicht. Die luftschalldämmende und körperschalldämpfende Wirkung dieses Materialaufbaus ist bekannt und deshalb Stand der Technik. Die eingang bezeichneten Mängel sind jedoch auch bei dieser Ausgestaltung vorhanden, denn es wird zunächst die Trennwand hergestellt und dann erfolgt nacheinander die Beschichtung der Trennwand mit dem Schaumstoff und der Schwerschicht.

Die Erfindung, wie sie im Anspruch 1 gekennzeichnet ist, löst nun in Ausräumung der vorgenannten Nachteile die Aufgabe, einen Materialaufbau der eingangs bezeichneten Art zu schaffen, bei dem auch bei einer schwierigen Form des Konstruktionsteiles die mittlere Zone und die Außenzone in einfacher Weise gleichzeitig und somit preisgünstig hergestellt werden können.

Bei der erfindungsgemäßen Ausgestaltung wird die luftschalldämmende und/oder körperschalldämpfende Eigenschaft des Konstruktionsteiles sozusagen in einem Arbeitsgang gleichzeitig bei der Herstellung des Konstruktionsteiles geschaffen. Es ist eine einfache und schnelle Herstellung nicht nur deshalb gewährleistet, weil die mittlere Zone und die Außenzone gleichzeitig hergestellt werden, sondern auch dadurch, daß eine besondere Herstellungstechnik, nämlich das Spritzgießen innerhalb eines Spritzgießwerkzeuges zur Anwendung kommt. Der erfindungsgemäße Materialaufbau stellt sich somit als ein Formspritzteil dar, das in selbsttragender Ausführung hergestellt werden kann. Dabei kann in ebenfalls einfacher Weise eine Oberfläche bzw. Außenzone geschaffen werden, die durch die Verwendung eines gegenüber dem Kernmaterial härteren Außenmaterials härter bzw. fester ist, bzw. unabhängig davon in mehrfacher Hinsicht an vorliegende Anforderungen anpaßbar ist. Eine Anforderung ist z. B. Kratzfestigkeit der Außenzone bzw. deren Sichtfläche. Ein Konstruktionsteil, z. B. im Bereich des Armaturenbrettes eines Kraftfahrzeuges, oder eine Türverkleidung kann an seiner Oberseite verhältnismäßig weich und/oder handhabungsfreundlich hinsichtlich abgerundeter Kanten und Ecken ausgebildet werden. Außerdem lassen sich wahlweise glänzende, matte, glatte oder genarbte Oberflächen in einfacher Weise verwirklichen, die nicht nur dem angenehmen Äußeren des Konstruktionsteiles dienen, sondern auch aus handhabungstechnischen Gründen erwünscht sein können. Außerdem lassen sich den Wünschen entsprechende Farben der Oberfläche des Konstruktionsteiles in einfacher Weise verwirklichen, wobei es lediglich der bestimmten Einfärbung des für die Außenzone bestimmten Kunststoffmaterials bedarf.

Zur Herstellung des erfindungsgemäßen Materialaufbaus ist nur eine Spritzgießmaschine mit zwei Plastiziereinheiten erforderlich, wobei aus der einen Plastiziereinheit das körperschalldämpfende und/oder luftschalldämmende Material für die mittlere Zone und aus der anderen Plastiziereinheit das die Außenzone bildende Material in ein gemeinsames Spritzgießwerkzeug gespritzt wird. Die Technik der Zuordnung der vorgenannten Materialien jeweils für die mittlere Zone und die Außenzone ist an sich bekannt und bedarf hier keiner Erläuterung.

Als körperschalldämpfendes und/oder luftschalldämmendes Material eignen sich z. B. Thermoplaste oder auch Kunststoffschäume, die aufgrund chemischer Reaktion aufschäumen und verfestigen. Als Material für die Außenzone eignet sich jedes thermoplastische Material. In allen Fällen wird der Materialaufbau bzw. das Formspritzteil so gespritzt, daß das akustisch wirksame Kernmaterial vom Umhüllungsmaterial überdeckt ist. Eine Bedingung für beide Materialien besteht somit darin, daß sie beim Spritzen eine Verbindung miteinander eingehen.

Im Rahmen der Erfindung ist es nicht nur möglich, einen Materialaufbau zu schaffen, bei dem die gespritzte Außenzone die mittlere Zone allseitig umgibt, sondern es ist auch ein Materialaufbau möglich, bei dem die gespritzte Außenzone die mittlere Zone z.B. nur einseitig abdeckt. Ein Beispiel hierfür könnte eine aus Stahlblech bestehende Trennwand sein, bei der die mittlere Zone als mittlere Schicht und die Außenzone als eine Außenschicht angespritzt sind. In einem solchen Fall wird die andere Außenschicht durch den vorhandenen Träger (Blech) gebildet.

Beim erfindungsgemäßen Materialaufbau wird die körperschalldämpfende bzw. luftschalldämmende Wirkung in der eingangs schon beschriebenen Weise durch die weiche bzw. elastische mittlere Zone erreicht, aufgrund derer die Schallabstrahlung bei mechanischer Erregung deutlich verringert ist. Dies wird insbesondere bei einem Vergleich des erfindungsgemäßen Materialaufbaus mit einem üblichen Kunststoff-Formspritzteil deutlich.

Die erfindungsgemäße Ausgestaltung eignet sich auch gut für die Herstellung der Zonen in Schichten, wodurch sich langgestreckte, dünne und flächige Konstruktionsteile ergeben, wie es bei zum Schallschutz eingesetzten Konstruktionsteilen meistens der Fall ist.

Ein weiterer Vorteil besteht darin, daß als Kernmaterial Thermoplaste eingesetzt werden können, die so hoch gefüllt sind, daß sie keine hinreichende mechanische Festigkeit mehr aufweisen. Durch das Außenmaterial wird dann eine Festigkeit erreicht, die sonst nicht zu erwarten ist.

Es hat sich auch gezeigt, daß akustisch wirksame Materialien, z. B. auf der Basis von thermoplastisch verarbeitbarem Polyvinylacetat, die sich bisher nicht für spritzgegossene Teile einsetzen ließen, weil sie einen sogenannten kalten Fluß zeigen und dabei ihre Form verlieren, sich durchaus für die Herstellung von Formspritzteilen eignen, wenn erfindungsgemäß ein Aufbau gewählt wird, der als Kernmaterial hoch gefülltes (ca. 90 Gew. % Füllstoff) Polyvinylacetat enthält und dessen Außenmaterial aus z. B. Acrylnitril-Butadien-Styrol Copolymere (ABS) besteht.

Haftung zwischen den Materialien ist dann zu erwarten, wenn das Kernmaterial die gleiche Materialbasis wie das Mantelmaterial hat und wenn es sich um chemisch verträgliche Materialien handelt.

Als Kernmaterial eignet sich z. B. gefülltes EVA, EPDM, EPM, PVA, PP, PE, Bitumen. Als Füllstoffe lassen sich z. B. verwenden: Kreide, Schwerspat, Glimmer, Schiefermehl, Talkum, Ruß, Kaolin, Metallpulver und Metalloxid sowie Glaskugeln. Der Füllstoffgehalt beträgt zweckmäßig zwischen 60 und 95 Gew.%, wobei der mögliche Füllgrad von der Dichte und der Teilchengröße abhängig ist. Füllstoffe mit hoher Dichte wie z. B. Schwerspat, die zusätzlich relativ grobkörnig (bis 100 µm Teilchendurchmesser) sind, lassen sich bis zu 95 Gew. % in das Kernmaterial einarbeiten. Mit feinteiliger Kreide werden niedrigere Füllstoffwerte erreicht.

Als Mantelmaterial lassen sich alle gängigen Thermoplaste verwenden, z. B. ABS, PP, PC, EVA, PA, PMMA, POM, PPO, PS, PVC, PBTB.

Im folgenden werden die Werkstoffbezeichnungen für vorerwähnte Werkstoff-Kurzbezeichnungen angegeben.

    EVA  : Ethylen-Vinylacetat-Copolymere
    EPDM: Ethylen-Propylen-Terpolymer-Kautschuk
    EPM  : Ethylen-Propylen-Kautschuk

PVAC: Polyvinylacetat

PP  : Polypropylen

PE  : Polyethylen

ABS : Acrylnitril-Butadien-Styrol-Copolymere

PC  : Polycarbonat

PA  : Polyamid

PMMA: Poly-Methylmethacrylat

POM : Poly-Oxymethylen

PPO : Poly-Phenylenoxid

PS  : Polystyrol

PVC : Polyvinylchlorid

PBTB: Polybutylenteraphthalat


Nachfolgend wird ein Ausführungsbeispiel der Erfindung anhand einer vereinfachten Zeichnung näher beschrieben, die ein Konstruktionsteil im Querschnitt zeigt, das aus einem erfindungsgemäß ausgeführten Materialaufbau besteht.


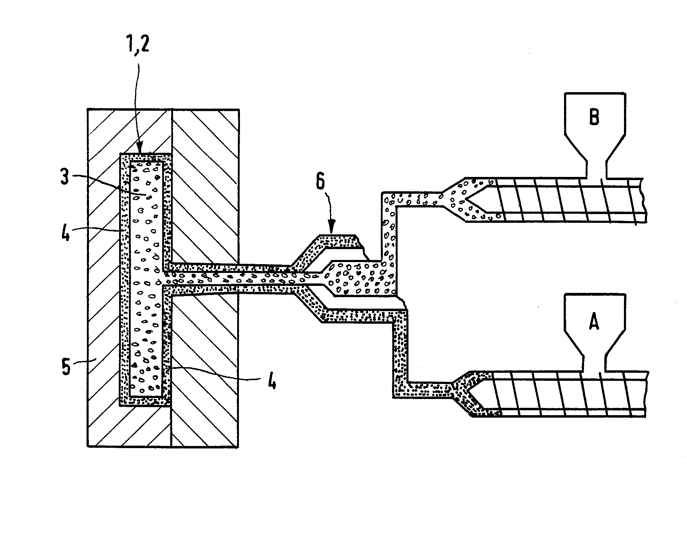

Bei dem in Fig. 1 allgemein mit 1 bezeichneten Konstruktionsteil handelt es sich um eine Trennwand 2 zur Abtrennung des Fahrgastraumes eines nicht dargestellten Kraftfahrzeugs, z. B. einer zwischen Motorraum und Fahrgastraum angeordneten Trennwand. Die Trennwand 2 kann auch eine Verkleidungswand z. B. für eine Kraftfahrzeugtür oder eine Hutablage darstellen. Die Trennwand 2 besteht aus einem verhältnismäßig weichen bzw. elastischen Kernmaterial, das von einem härteren Außenmaterial umgeben ist, und somit aus drei Schichten. Die Kernschicht 3 besteht z. B. aus einem Kunststoffschaum, der aufgrund chemischer Reaktion ausschäumt und sich festigt.


Die Außenschicht 4 besteht aus einem thermoplastischen Material und weist eine größere Festigkeit, z. B. Kratzfestigkeit, auf, die bei Gebrauchsgegenständen üblich ist.

Das Konstruktionsteil 1 hat eine bedeutende luftschalldämmende bzw. körperschalldämpfende Eigenschaft, die darauf beruht, daß eine durch Eigenschwingungen (Körperschall) oder durch Luftschall hervorgerufene Beaufschlagung des Konstruktionsteiles 1 aufgrund der akustisch wirksamen Kernschicht 3 nur in einem wesentlich verringerten Maße übertragen wird bzw. die Sekundär- Schallabstrahlung des Konstruktionsteiles 1 merklich verringert ist.

Die Dicke der Schichten kann unterschiedlich sein und ist jeweils nach der Art des Schalls (Luftschall, Körperschall) und dem Schallaufkommen zu bestimmen. Als Kernmaterial für die Kernschicht 3 eignet sich z. B. gefülltes EVA. Als Mantelmaterial eignen sich alle üblichen Thermoplaste, z. B. ABS.

Das Konstruktionsteil 1 befindet sich in einem Spritzgießwerkzeug 5, an das eine 2-Kanal-Spritzdüse 6 angeschlossen ist, zu der das Kernmaterial und das Außenmaterial von zwei Plastiziereinheiten A, B gelangt. Zur Herstellung des Konstruktionsteiles 1 ist somit nur eine Spritzgießmaschine erforderlich, die von zwei bzw. wenigstens zwei Plastiziereinheiten gespeist wird.

Dr. Alois Stankiewicz GmbH
3101 Adelheidsdorf

A N S P R Ü C H E
==================

1. Luftschalldämmender und körperschalldämpfender Materialaufbau aus Kunststoff für Konstruktionsteile, insbesondere für Kraftfahrzeugteile, bestehend aus wenigstens
   drei Querschnittszonen, von denen die mittlere Zone aus
   einem weichen bzw. elastischen Kernmaterial besteht,
   dadurch gekennzeichnet,
   daß die mittlere Zone (3) und die Außenzone bzw. -zonen
   (4) gleichzeitig durch Einspritzen der Polymerschmelze
   oder -schmelzen mittels einer 2-Kanal-Spritzdüse (6)
   innerhalb eines Spritzgießwerkzeugs (5) hergestellt sind.

2. Materialaufbau nach Anspruch 1, dadurch gekennzeichnet, daß das Kernmaterial (mittlere Zone 3) ein körperschalldämpfendes oder luftschalldämmendes, gegebenenfalls auch ein geschäumtes Material ist.

3. Materialaufbau nach Anspruch 1 oder 2, dadurch gekennzeichnet, daß das Außenmaterial (Außenzone 4) aus einem üblichen Thermoplast besteht.